(19) Europäisches Patentamt

European Patent Office

Office européen des brevets

(11) Veröffentlichungsnummer: **0 318 108 B1**

(12) **EUROPÄISCHE PATENTSCHRIFT**

(45) Veröffentlichungstag der Patentschrift: **24.06.92**

(21) Anmeldenummer: **88202648.7**

(22) Anmeldetag: **24.11.88**

(51) Int. Cl.⁵: **C01G 23/00**

(54) Verfahren zur Herstellung von Bariumtitanat in Pulverform.

(30) Priorität: **25.11.87 DE 3739855**

(43) Veröffentlichungstag der Anmeldung:
**31.05.89 Patentblatt 89/22**

(45) Bekanntmachung des Hinweises auf die
Patenterteilung:
**24.06.92 Patentblatt 92/26**

(84) Benannte Vertragsstaaten:
**DE FR GB NL**

(56) Entgegenhaltungen:
**US-A- 3 647 364**

**PATENT ABSTRACTS OF JAPAN Band 10, Nr.
172 (C-354)(2228), 18. Juni 1986; & JP-A-61 21
916 (NIPPON KAGAKU KOGYO K.K.) 30. 01.
1986**

**CHEMICAL ABSTRACTS Band 107, Nr.14, 5.
Oktober 1987,Seite 268, Zusammenfassung
Nr. 119845x, Columbus, Ohio, USA; M.KLEE et
al.: " Reaction products in the hydrolysis of
barium titanium isopropylates of 1:1 composition" & Klei/Glas/Keramik 1987 Band 8,Nr.4,
Seiten 60-64**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB NL**

(72) Erfinder: **Klee, Mareike Katharine, Dr.
Randeratherweg 27
W-5142 Hückelhoven/Brachelen(DE)**
Erfinder: **Brand, Hans-Wolfgang
Schlossparkstrasse 43
W-5100 Aachen(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

## Beschreibung

Die Erfindung betrifft ein Verfahren zur Herstellung von Bariumtitanat in Pulverform durch Hydrolyse von Barium-Titanalkoholaten.

Keramische Pulver mit Perowskitstruktur, z.B. $BaTiO_3$-Pulver, sind ein wichtiger Ausgangsstoff zur Erstellung unterschiedlichster elektronischer Bauelemente wie z.B. Vielschichtkondensatoren oder auch nichtlineare Widerstände mit positiver Temperaturcharakteristik. Das Erfordernis der ständig steigenden Verbesserung der elektronischen Bauelemente sowie eine bessere Prozeßbehrrschung bei der Herstellung dieser Bauelemente stellt erhöhte Anforderungen an die Ausgangsstoffe. Es werden insbesondere feinteilige Pulverpartikel mit runder Partikelform und in enger Partikelgrößenverteilung gefordert. Die Ausgangsstoffe sollen weiterhin eine hohe Reinheit besitzen. Ein besonderes Problem ist, daß für bestimmte Anwendungszwecke schon beim Herstellungsprozeß des Ausgangsstoffes homogen verteilte Dotierungen mit unterschiedlichen Dotierstoffen in unterschiedlichen Mengen eingebracht werden müssen. Darüberhinaus müssen die zur Herstellung der Bariumtitanat-Pulver eingesetzten Verfahren kostengünstig und präparativ wenig aufwendig sein, wenn eine Großserienfertigung wirtschaftlich arbeiten soll.

Bariumtitanat-Pulver werden nach sehr unterschiedlichen Verfahren hergestellt, die jedoch alle gewisse Nachteile insbesondere hinsichtlich der Reinheit, der Partikelgröße und der Partikelgrößenverteilung sowie einer homogenen Dotierbarkeit der hergestellten pulverförmigen Ausgangsstoffe haben.

So ist es bekannt, Bariumtitanat-Pulver nach dem sogenannten mixed-oxide-Verfahren herzustellen. Bariumcarbonat und Titandioxid werden dabei während eines Mahlprozesses gemischt und bei hohen Temperaturen im Bereich von 1000 °C zu $BaTiO_3$ umgesetzt. Nachteilig ist hierbei, daß das Pulver während der notwendigen Mahlprozesse durch Abrieb in unerwünschter Weise verunreinigt wird. Ein weiterer Nachteil ist, daß hohe Calcinierungstemperaturen erforderlich sind, wobei große aggregierte $BaTiO_3$-Pulverpartikel mit unregelmäßiger Partikelform und in breiter Partikelgrößenverteilung gebildet werden, die nach dem Calcinieren durch einen Mahlprozess zerkleinert werden müssen, wobei jedoch Partikelgrößen $< 1$ $\mu m$ nicht erreicht werden können. Dotierungen können in diesem Prozeß nur heterogen eingebracht werden, indem z.B. dem $BaTiO_3$-Pulver entsprechende Oxide zugesetzt werden. Die Dotierstoffe werden dem zu mahlenden Pulver entweder vor oder nach dem Calcinieren zugefügt.

Nachteilig ist bei diesem Verfahren auch, daß der Calcinierungsschritt einen erheblichen Aufwand an Energie erfordert.

Weiter ist es z.B. aus J.Am.Cer.Soc. 48 (1965), Seite 644 ff bekannt, $BaTiO_3$-Pulver durch thermische Zersetzung von Präzipitaten, z.B. von Bariumtitanyloxalaten, herzustellen. Dieses Verfahren liefert durch die Präzipitation zwar ein reineres Pulver als es mit dem mixed-oxide-Verfahren erhalten werden kann, jedoch sind auch hier Reaktionstemperaturen von etwa 1000 °C erforderlich. Die hierbei entstehenden Pulveraggregate müssen auch bei diesem Verfahren durch einen Mahlprozeß zerkleinert werden. Homogene Dotierungen mit genau definiertem Gehalt sind, durch z.B. Copräzipitation, schwierig zu erreichen.

Die meist erheblich unterschiedlichen Löslichkeiten der Hauptbestandteile sowie der Dotierungskomponenten führen dazu, daß die Dotierungskomponenten unter den erforderlichen Bedingungen entweder nur teilweise oder überhaupt nicht präzipitiert werden können. Ist eine Präzipitation der Dotierungskomponenten möglich, ist aufgrund der unterschiedlichen Präzipitationseigenschaften eine homogene Dotierung mit definiertem Gehalt kaum durchführbar.

Feinteiliges, hochreines Bariumtitanat-Pulver mit einem Partikeldurchmesser im Bereich von 0,005 bis 0,03 $\mu m$ kann durch Präzipitation bei niedrigen Temperaturen im Bereich von 20 bis 90 °C nach zwei weiteren bekannten Verfahren dargestellt werden:

1. Hydrolyse von Barium-Titanalkoholaten mit $H_2O$ (J.Am.Cer.Soc. 54 (1971), Seiten 548 bis 553) und

2. Hydrolyse von Titanalkoholaten in wässeriger $Ba(OH)_2$-Lösung (J.Am.Cer.Soc. 49 (1966), Seiten 291 bis 295).

Diese beiden bekannten Verfahren sind präparativ sehr aufwendig. Zur Verhinderung der Zersetzung der Alkoholate zu $BaCO_3$, $TiO_2$ bzw. $Ba(OH)_2$ muß unter einer Atmosphäre gearbeitet werden, die frei von $H_2O$, $CO_2$ und $O_2$ ist. Wenn nicht eine spezielle Prozeßkontrolle insbesondere von Reaktionstemperatur, Konzentration und Fällungsgeschwindigkeit durchgeführt wird, werden unerwünschte Abweichungen von der Morphologie und der Stöchiometrie des Bariumtitanat-Pulvers erhalten. Da diese beiden bekannten Verfahren Präzipitationsprozesse sind, ist auch bei diesen beiden Verfahren eine homogene Dotierung des Pulvers mit mehreren Komponenten und definiertem Dotierungsgehalt kaum zu erreichen.

$BaTiO_3$-Pulver kann weiterhin durch eine hydrothermale Reaktion erhalten werden. Dieses z.B. aus DE-OS 35 26 674 bekannte Verfahren ermöglicht, unter Einsatz von Hydroxiden, Halogeniden oder Alkoholaten bei Temperaturen im Bereich von 150 bis 200 °C und bei Drucken zwischen 5 bis 15 bar feinteiliges $BaTiO_3$-Pulver darzustellen. Der präpa-

rative Aufwand dieses bekannten Verfahrens ist relativ hoch, da die Reaktion in Autoklaven stattfinden muß, wobei bestimmte Sicherheitsvorkehrungen getroffen werden müssen. Weiter kann es nachteilig sein, daß die Darstellung des BaTiO$_3$-Pulvers nicht kontinuierlich sondern nur in einem Batchprozeß erfolgen kann.

Der Erfindung liegt die Aufgabe zugrunde, ein Verfahren anzugeben, mit dem hochreines Bariumtitanat-Pulver hergestellt werden kann, das gegenüber den bekannten Bariumtitanat-Pulvern ein engeres Sinterintervall und damit eine verbesserte Sinterfähigkeit aufweist, das eine verbesserte Reaktivität zeigt mit Dotierstoffen, wie sie keramischen Massen auf Basis von Bariumtitanat zum Erreichen von gewünschten technischen Eigenschaften des Sinterproduktes zugegeben werden und das bei relativ niedriger Reaktionstemperatur bereits in einer geeigneten Partikelgröße und Partikelgrößenverteilung erhalten wird, so daß Mahlprozesse überflüssig werden.

Diese Aufgabe wird erfindungsgemäß dadurch gelöst, daß ein homogenes, ein Bariumalkoholat und ein Titanalkoholat enthaltendes Lösungsgemisch in einer mit Wasserdampf gesättigten N$_2$-Atmosphäre bei einer Temperatur im Bereich von 30 bis 60 °C zur Reaktion gebracht und das gebildete Bariumtitanat-Gel unter Vakuum bei einer Temperatur von 50 °C über eine Dauer von 24 h getrocknet wird.

Nach einer vorteilhaften Ausgestaltung des Verfahrens gemäß der Erfindung wird das Bariumalkoholat/Titanalkoholat-Lösungsgemisch mit folgenden Verfahrensschritten hergestellt:

a) Herstellung einer Bariumalkoholat-Lösung durch Reaktion von metallischem Barium mit Isopropanol unter Inertgasatmosphäre,

b) Herstellung einer Titanalkoholat-Lösung durch Lösen von Titan-tetra-isopropoxid in getrocknetem Alkohol unter Inertgasatmosphäre,

c) Mischen der gemäß den Prozeßschritten a) und b) erhaltenen Lösungen in stöchiometrischer Menge.

Nach einer weiteren vorteilhaften Ausgestaltung des Verfahrens gemäß der Erfindung wird das Bariumtitanat-Gel aus dem Bariumalkoholat/Titanalkoholat-Lösungsgemisch durch Umsetzen in einer mit Wasserdampf gesättigten N$_2$-Atmosphäre bei einer Temperatur von 30 °C über eine Dauer von 65 h hergestellt.

Mit dem Verfahren gemäß der Erfindung sind folgende Vorteile verbunden:

Es wird bei relativ niedrigen Reaktionstemperaturen im Bereich von 30 bis 60 °C, vorzugsweise bei einer Temperatur von 30 °C, und unter Atmosphärendruck ein feinkörniges, kristallines Bariumtitanat-Pulver einer Partikelgröße im Bereich von 0,01 bis 0,06 $\mu$m erhalten, das keinem weiteren Mahlprozeß mehr unterworfen werden muß; das erfindungsgemäße Verfahren umgeht also vorteilhafterweise hohe Reaktionstemperaturen und zu Verunreinigungen führende Mahlprozesse.

Weiterhin ermöglicht das erfindungsgemäße Verfahren die Herstellung von Bariumtitanat-Pulvern wohl definierter Partikelgröße und Morphologie ohne aufwendige Prozeßkontrolle.

Die Reaktion zu Bariumtitanat erfolgt im vorliegenden Verfahren durch Gelieren von Bariumalkoholat/Titanalkoholat-Lösungen. Dies hat zum einen den großen Vorteil, daß die Zusammensetzung des erstellten Pulvers durch die Mengen an Ausgangsstoffen bestimmbar und je nach Wunsch in weiten Bereichen variierbar ist.

Da im vorliegenden Verfahren ein Gelieren zum Endprodukt führt, ist eine homogene Dotierung mit genau bestimmtem Gehalt sehr leicht durchführbar, wenn entsprechende Rohstoffe eingesetzt werden. Dies ist mit den bekannten Verfahren nicht möglich.

Die Partikelgröße des nach dem vorliegenden Verfahren erhaltenen Bariumtitanat-Pulvers läßt sich durch Variieren der Reaktionsparameter wie Reaktionstemperatur, Reaktionszeit und Konzentration der Ausgangslösungen beeinflussen. Gegenüber dem hydrothermalen Prozeß hat das vorliegende Verfahren den Vorteil, daß die Reaktion zur Bildung von Bariumtitanat ohne erhöhten Druck erfolgen kann. Das Arbeiten unter Atmosphärendruck ermöglicht einen kontinuierlichen Prozeß, wohingegen bei Reaktionen unter Druck nur ein Batchprozeß eingesetzt werden kann. Durch die kontinuierliche Prozeßführung können erhebliche Kosten eingespart werden, weil sich keine Leerlaufzeiten für die Vorrichtung ergeben, weil die Vorrichtungsgröße je nach Bedarf gewählt werden kann und weil eine kontinuierliche Prozeßsteuerung möglich ist.

Anhand der Figuren wird ein Ausführungsbeispiel der Erfindung beschrieben und in seiner Wirkungsweise erläutert.

Es zeigen:

Fig. 1    Röntgenbeugungsdiagramm von nach dem Verfahren gemäß der Erfindung hergestelltem Bariumtitanat-Gel,

Fig. 2    Röntgenbeugungsdiagramm von nach dem Verfahren gemäß der Erfindung hergestelltem Bariumtitanat-Pulver.

Gemäß dem erfindungsgemäßen Verfahren wird Bariumtitanat-Pulver auf folgende Weise dargestellt:

Ein homogenes Gemisch aus Titan-tetra-isopropoxid und Barium-di-isopropoxid wird in einer mit Wasserdampf gesättigten N$_2$-Atmosphäre bei vorzugsweise einer Temperatur von 30 °C zur Reaktion gebracht. Es findet ein Gelieren der Metallalkoholatlösung zu einem getrübten Bariumtitanat-Gel statt.

Ausführungsbeispiel:

18,9 g metallisches Barium werden mit 375 ml Isopropanol unter einer Inertgasatmosphäre, z.B. Argonatmosphäre, zur Reaktion gebracht. Das einzusetzende Isopropanol wird über Mg-Spänen getrocknet und destilliert. Die 0,367 M Bariumalkoholat-Lösung wird zur Entfernung geringer Mengen unaufgelöster Bariumspäne über ein Filter aus Zelluloseacetat einer Porengröße von 0,2 $\mu$m unter $N_2$-Atmosphäre abfiltriert.

Eine dem stöchiometrischen Verhältnis zur Bildung von $BaTiO_3$ entsprechende Menge Titan-tetra-isopropoxid wird in 200 ml getrocknetem Isopropanol unter Inertgasatmosphäre, z.B. einer Argonatmosphäre, gelöst.

Die auf die oben beschriebene Weise erhaltenen Barium- und Titanalkoholat-Lösungen werden in stöchiometrischer Menge zusammengefügt und über eine Dauer von 10 h unter Rückfluß in einer $N_2$-Atmosphäre zur Reaktion gebracht. Während der Reaktion der beiden Alkoholate gebildete farblose Kristallite eines titanreichen Doppelalkoholats werden durch Zugabe von m-Xylol bei einer Temperatur von 50 °C aufgelöst.

Es wird eine klare und kristallitfreie Lösung einer Konzentration an Barium bzw. Titan von 0,19 M/l erhalten.

750 ml dieser 0,19 molaren Lösung werden in eine Petrischale mit einem Durchmesser von 14 cm überführt. Zwei weitere Petrischalen eines Durchmessers von jeweils 8 cm werden jeweils mit 50 ml doppelt destilliertem, $CO_2$-freiem Wasser gefüllt und neben der Schale mit der Alkoholatlösung in einem Trockenschrank positioniert. Der Trockenschrank wird zur Entfernung von $CO_2$ mit Stickstoff gespült und während der Reaktion unter leichtem Stickstoffstrom gehalten. Bei einer Temperatur von 30 °C findet eine Hydrolyse des Barium-Titanalkoholats mit dem Wasser aus der mit Wasserdampf gesättigten Atmosphäre statt. Innerhalb einer Reaktionszeit von 65 h wird ein trübes Bariumtitanat-Gel gebildet. Das erhaltene Bariumtitanat-Gel wird unter Vakuum bei einer Temperatur von 50 °C über eine Dauer von 24 h getrocknet.

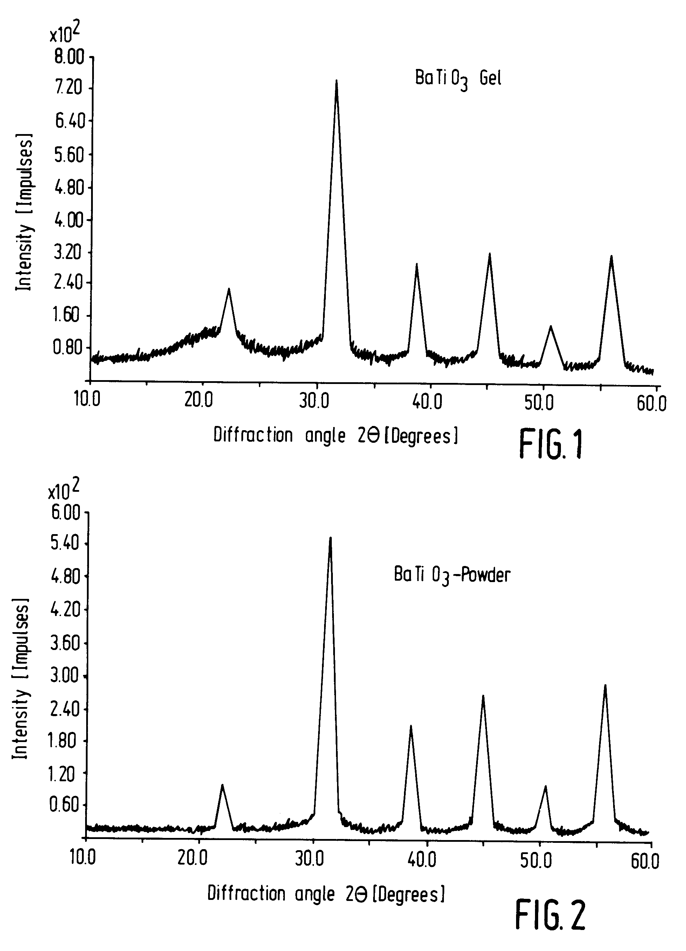

Wie dem Röntgenbeugungsdiagramm gemäß Figur 1 (Bariumtitanat-Gel) zu entnehmen ist, hat sich das Doppelalkoholat unter den oben beschriebenen Bedingungen vollständig zu $BaTiO_3$ umgesetzt. Das Röntgenbeugungsdiagramm zeigt nur die Interferenzlinien von $BaTiO_3$. Das breite Maximum bei $2\theta \approx 19$ Grad stammt von Lösungsmittelresten.

Die Lösungsmittelreste werden in Vakuum bei einer Temperatur von 50 °C innerhalb einer Dauer von 24 h entfernt.

Wie das Röntgenbeugungsdiagramm gemäß Figur 2 (Bariumtitanat-Pulver) zeigt, sind nur noch die Interferenzlinien von $BaTiO_3$ zu erkennen.

Das nach dem Verfahren gemäß der vorliegenden Erfindung hergestelltle Bariumtitant-Pulver weist kubische Modifikation auf. Eine tetragonale Aufspaltung der kubischen Gitterzelle ist nicht beobachtet worden.

Anhand der Breite der Röntgenbeugungsreflexe ist erkennbar, daß ein sehr feinteiliges Bariumtitanat-Pulver erhalten wird.

Mittels Transmissionselektronenmikroskopie bei 480 000-facher Vergrößerung wurde festgestellt, daß das Bariumtitanat-Gel $BaTiO_3$-Kristallite eines Durchmessers im Bereich von 6 bis 12 nm aufweist. Nach einer Trocknung des Bariumtitanat-Gels bei einer Temperatur von 50 °C im Vakuum wurden mittels rastermikroskopischer Aufnahmen $BaTiO_3$-Partikel mit einer Teilchengröße im Bereich von 0,06 bis 0,1 $\mu$m festgestellt.

Das Barium:Titan-Verhältnis in herzustellenden Pulvern kann durch das Barium:Titan-Verhältnis des für die Bildung des Bariumtitanat-Pulvers eingesetzten Doppelalkoholats eingestellt werden.

**Patentansprüche**

1. Verfahren zur Herstellung von Bariumtitanat in Pulverform durch Hydrolyse von Barium-Titanalkoholaten,
   **dadurch gekennzeichnet,**
   daß ein homogenes, ein Bariumalkoholat und ein Titanalkoholat enthaltendes Lösungsgemisch in einer mit Wasserdampf gesättigten $N_2$-Atmosphäre bei einer Temperatur im Bereich von 30 bis 60 °C zur Reaktion gebracht und das gebildete Bariumtitanat-Gel unter Vakuum bei einer Temperatur von 50 °C über eine Dauer von 24 h getrocknet wird.

2. Verfahren nach Anspruch 1,
   **dadurch gekennzeichnet,**
   daß das Bariumalkoholat/Titanalkoholat-Lösungsgemisch mit folgenden Verfahrensschritten hergestellt wird:
   a) Herstellung der Bariumalkoholat-Lösung durch Reaktion von metallischem Barium mit Isopropanol unter Inertgasatmosphäre,
   b) Herstellung der Titanalkoholat-Lösung durch Lösen von Titan-tetra-isopropoxid in getrocknetem Alkohol unter Inertgasatmosphäre,
   c) Mischen der gemäß den Prozeßschritten a) und b) erhaltenen Lösungen in stöchiometrischer Menge.

3. Verfahren nach Anspruch 2,
   **dadurch gekennzeichnet,**
   daß das Bariumtitanat-Gel aus dem Bariumalkoholat/Titanalkoholat-Lösungsgemisch durch Umsetzen in einer mit

Wasserdampf gesättigten N$_2$-Atmosphäre bei einer Temperatur von 30 °C über eine Reaktionsdauer von 65 h hergestellt wird.

## Claims

1. A method of manufacturing powdery barium titanate by hydrolysis of barium titanium alcoholates, characterized in that a homogeneous solution mixture comprising a barium alcoholate and a titanium alcoholate is made to react in a water vapour-saturated N$_2$ atmosphere at a temperature in the range from 30°C to 60°C, and the barium titanate gel formed is dried in a vacuum at a temperature of 50°C for 24 hours.

2. A method as claimed in Claim 1, characterized in that the barium alcoholate/titanium alcoholate solution mixture is manufactured in the following process steps:
   a) the manufacture of the barium alcoholate solution by reacting metallic barium with isopropanol in an inert gas atmosphere,
   b) the manufacture of the titanium alcoholate solution by dissolving titanium-tetra-isopropoxide in dried alcohol in an inert gas atmosphere,
   c) mixing the solutions obtained according to the process steps a) and b) in a stoichiometric quantity.

3. A method as claimed in Claim 2, characterized in that the barium titanate gel is manufactured from the barium alcoholate/titanium alcoholate solution mixture by conversion in a water vapour-saturated N$_2$ atmosphere at a temperature of 30°C for a period 65 hours.

## Revendications

1. Procédé de préparation de titanate de baryum sous forme de poudre par hydrolyse d'alcoolats de baryum et de titane, caractérisé en ce qu'un mélange de solution homogène comportant un alcoolat de baryum et un alcoolat de titane est mise en réaction dans une atmosphère N$_2$ saturée de vapeur d'eau, à une température comprise entre 30 et 60°C, et en ce que le gel de titanate de baryum formé est séché sous vide, à une température de 50°C, pendant une durée de 24 heures.

2. Procédé selon la revendication 1, caractérisé en ce que la préparation du mélange de solution constitué d'alcoolats de baryum et de titanate comporte les étapes suivantes:
   a) préparation d'une solution d'alcoolat de baryum par une réaction de baryum métallique avec de l'isopropanol, dans une atmosphère de gaz inerte;
   b) préparation d'une solution d'alcoolat de titane par une dissolution de tétraisopropoxyde de titane dans de l'alcool séché, dans une atmosphère de gaz inerte;
   c) mélange, en quantités stoechiométriques, des solutions préparées conformément aux étapes de processus a) et b).

3. Procédé selon la revendication 2, caractérisé en ce que le gel de titanate de baryum est préparé du mélange de solution comportant d'alcoolats de baryum et de titanate, par transformation dans une atmosphère N$_2$, saturée de vapeur d'eau, à une température de 30°C, pendant une durée de 65 heures.

FIG.1

FIG.2